# EUROPÄISCHE PATENTANMELDUNG

(11) **EP 4 509 746 A1**
(43) Veröffentlichungstag der Anmeldung: **19.02.2025**
(21) Anmeldenummer: 23191519.0
(22) Anmeldetag: 15.08.2023
(51) Int. Cl.: F16L 11/04, F16L 11/08, F16L 59/14, F16L 59/15, F16L 59/153, B29D 23/00, B32B 1/00, F16L 1/028

(54) **MEHRSCHICHTIGE ROHRLEITUNG, IHRE VERWENDUNG SOWIE VERFAHREN ZUM VERLEGEN EINER SOLCHER**

(71) Anmelder: Aborra AG, 8152 Opfikon (CH)
(72) Erfinder: Civelek, Resat, 8803 Rüschlikon (CH); Amor, Adel, 6020 Emmenbrücke (CH)
(74) Vertreter: Keller Schneider Patent- und Markenanwälte AG

(57) **Zusammenfassung**

Die Erfindung betrifft eine mehrschichtige Rohrleitung (1,1',1") zum Führen eines Fluides, wobei die mehrschichtige Rohrleitung (1,1',1") zumindest folgende Schichten aufweist: a) eine innere Schicht (2,2',2",2‴), die ein inneres Rohr zum Führen des Fluides ausbildet, b) eine die innere Schicht (2,2',2",2‴) umgebende Isolationsschicht (3), wobei die Isolationsschicht (3) auf einer von einer Mittellinie des inneren Rohrs abgewandten Seite der inneren Schicht (2,2',2",2‴) angeordnet ist, und c) eine die Isolationsschicht (3) umgebende äussere Schicht (4), wobei die äussere Schicht auf einer von der Mittellinie des inneren Rohrs abgewandten Seite der Isolationsschicht (3) angeordnet ist, und wobei die äussere Schicht (4) an mindestens 50%, insbesondere an mindestens 70%, insbesondere an mindestens 90% und vorzugsweise an 100% ihrer an die Isolationsschicht (3) angrenzenden Seite nicht stoffschlüssig mit der Isolationsschicht (3) verbunden ist und/oder relativ zur Isolationsschicht (3) bewegbar ist. Die Erfindung betrifft auch eine Verwendung der mehrschichtigen Rohrleitung (1,1',1") zum Verbinden eines Warmwasserheizungssystems (15) mit einer Wärmepumpe (12) und ein Verfahren zum Verlegen der mehrschichtigen Rohrleitung (1,1',1").

## Beschreibung

### Technisches Gebiet

Die Erfindung betrifft eine mehrschichtige Rohrleitung zum Führen eines Fluides, eine Verwendung der mehrschichtigen Rohrleitung zum Verbinden eines Warmwasserheizungssystems mit einer Wärmepumpe, und ein Verfahren zum Verlegen der mehrschichtigen Rohrleitung.

### Stand der Technik

Mehrschichtige Rohrleitungen zum Führen eines Fluides sind im Stand der Technik häufig anzutreffen, wobei die unterschiedlichen Schichten der aus dem Stand der Technik bekannten mehrschichtigen Rohrleitungen zu Isolationszwecken oder zur mechanischen Stabilisierung oder der Verhinderung von Beschädigungen der Rohrleitung dienen.

Im Zusammenhang mit der Errichtung eines neuen Gebäudes werden häufig leere Rohre im Haus oder in der unmittelbaren Umgebung des Hauses verlegt, um eine Möglichkeit für eine spätere Installation zum Beispiel eines neuen Heizungssystems zu ermöglichen, ohne dass grosse nachträgliche Arbeiten am Haus oder der Umgebung desselben vonnöten sind. Eine Rohrleitung zum Verbinden einer neu installierten Wärmepumpe mit einem bereits vorhandenen Warmwasserheizungssystem kann insbesondere durch ein bereits verlegtes leeres Rohr gezogen werden, so dass ein nachträglicher Einbau einer Wärmepumpe leicht durchgeführt werden kann.

Aus dem Stand der Technik bekannte mehrschichtige Rohrleitungen sind jedoch so beschaffen, dass ein Verlegen durch ein bereits verlegtes Rohr nur schwierig zu bewerkstelligen ist und insbesondere einen grossen Krafteinsatz eines Installateurs erfordert. Dies macht eine nachträgliche Installation einer Wärmepumpe, die aus Gründen einer Geräuschbelästigung zum Beispiel in grösserer Entfernung eines Hauses aufgebaut werden soll, schwierig, da die mehrschichtigen Rohrleitungen zum Teil durch mehrere Meter lange, insbesondere mehr als zehn Meter lange, leere Rohre, insbesondere Grundrohre im Erdreich, gezogen werden müssen.

### Darstellung der Erfindung

Es ist daher eine Aufgabe der Erfindung, eine mehrschichtige Rohrleitung bereitzustellen, welche zumindest einige der Nachteile der aus dem Stand der Technik bekannten mehrschichtigen Rohrleitungen beseitigt. Insbesondere soll die Rohrleitung möglichst einfach in Leerrohre einziehbar sein und dabei vor Beschädigungen geschützt werden.

Die Lösung der Aufgabe ist durch die Merkmale der Ansprüche 1, 12 und 14 definiert. Gemäss einem ersten Aspekt der Erfindung betrifft die Erfindung eine mehrschichtige Rohrleitung zum Führen eines Fluides, wobei die mehrschichtige Rohrleitung zumindest folgende Schichten aufweist:
a) eine innere Schicht, die ein inneres Rohr zum Führen des Fluides ausbildet,
b) eine die innere Schicht umgebende Isolationsschicht, wobei die Isolationsschicht auf einer von einer Mittellinie des inneren Rohrs abgewandten Seite der inneren Schicht angeordnet ist, und
c) eine die Isolationsschicht umgebende äussere Schicht, wobei die äussere Schicht auf einer von der Mittellinie des inneren Rohrs abgewandten Seite der Isolationsschicht angeordnet ist, und wobei die äussere Schicht an mindestens 50%, insbesondere an mindestens 70%, insbesondere an mindestens 90% und vorzugsweise an 100% ihrer an die Isolationsschicht angrenzenden Seite nicht stoffschlüssig mit der Isolationsschicht verbunden ist und/oder relativ zur Isolationsschicht bewegbar ist.

Die an die Isolationsschicht angrenzende Seite der äusseren Schicht kann auch als innenseitige Fläche bezeichnet werden. Unter dem Ausdruck «relativ bewegbar» ist insbesondere zu verstehen, dass unter dem Einfluss von auf die äussere Schicht einwirkenden Scherkräften sich diese so gegenüber der Isolationsschicht bewegen kann, dass die einwirkenden Scherkräfte im Wesentlichen über die sich bewegende äussere Schicht abgeleitet werden und im Wesentlichen nicht auf die Isolationsschicht einwirken. Die äussere Schicht ist vorzugsweise so aufgebaut, dass an jedem Punkt, insbesondere in nicht-stoffschlüssig mit der Isolationsschicht verbundenen Bereichen, der äusseren Schicht eine zur Isolationsschicht relative Bewegung in alle Richtungen (beispielsweise auf eine am entsprechenden Punkt definierte Tangentialebene bezogen) entlang der Oberfläche der Isolationsschicht möglich ist, so dass aus unterschiedlichen Richtungen einwirkende Scherkräfte so aufgenommen werden können, dass keine wesentlichen Kräfte auf die Isolationsschicht einwirken. Vorteilhafterweise kann somit eine Beschädigung, insbesondere ein Reissen, der Isolationsschicht durch einwirkende Scherkräfte verhindert bzw. verringert werden.

Die innere Schicht ist vorzugsweise so ausgebildet, dass das geführte Fluid nicht austritt, d.h. die innere Schicht ist vorzugsweise dicht ausgebildet. Die innere Schicht ist weiterhin vorzugsweise so ausgebildet, dass sie chemisch beständig gegenüber dem zu führenden Fluid, beispielsweise Wasser oder ein Wasser-Glykol-Gemisch, ist, und dass sie je nach Anwendung hinreichend hitzebeständig ist.

Das mehrschichtige Rohr ist vorzugsweise auch so ausgebildet, dass es im Wesentlichen metallfrei ist, so dass die mehrschichtige Rohrleitung vereinfacht bearbeitet werden kann. Beispielsweise kann eine im Wesentlichen metallfreie mehrschichtige Rohrleitung an einem Ende vereinfacht verkürzt werden, und das innere Rohr kann z.B. über eine Bride mit einem Anschluss eines Warmwasserheizungssystems oder einer Wärmepumpe verbunden werden. Im Unterschied zu einem aus Metall gebildeten inneren Rohr erlaubt ein im Wesentlichen metallfreies inneres Rohr daher ein vereinfachtes Anschliessen, da z.B. auf einen Schritt des Verschweissens verzichtet werden kann.

Der Begriff «Mittellinie» ist insbesondere so zu verstehen, dass eine imaginäre Linie damit bezeichnet wird, die sich in longitudinaler Richtung, einer Hauptausdehnungsrichtung des inneren Rohres folgend, erstreckt, und die im Mittelpunkt des Inneren des inneren Rohres verläuft. Im Falle eines inneren Rohres als Hohlzylinder liegt der Mittelpunkt beispielsweise in der Mitte des Innendurchmessers des Hohlzylinders.

Die Isolationsschicht ist vorzugsweise so ausgebildet und dimensioniert, dass eine hinreichende Wärmedämmung zwischen einem Inneren des inneren Rohrs und einer Umgebung ermöglicht wird, so dass z.B. ein warmes Fluid im inneren Rohr nicht zu stark durch eine kältere Umgebung gekühlt wird und umgekehrt.

Gemäss einer Ausführungsform der erfindungsgemässen mehrschichtigen Rohrleitung enthält die innere Schicht Kautschuk, und/oder ist die Isolationsschicht als Polyurethanschaumstoff und/oder als Ethylen-Propylen-Dien-I<autschul<-Schaumstoff (EPDM-Schaumstoff) ausgebildet, und/oder ist die äussere Schicht als textiles Flächengebilde ausgebildet.

Die Isolationsschicht kann im Allgemeinen als geschäumtes Polymermaterial ausgebildet sind, wobei ein Polyurethanschaumstoff und/oder ein EPDM-Schaumstoff bevorzugte Materialen darstellen. Unter einem "Polymer" wird vorliegend insbesondere ein organisches Polymer verstanden.

Gemäss einer weiteren Ausführungsform der erfindungsgemässen mehrschichtigen Rohrleitung ist das textile Flächengebilde als Polyamidgewebe, insbesondere Polyamid vom Typ PA 6 aufweisend, ausgebildet.

Das textile Flächengebilde kann im Allgemeinen als Polymergewebe ausgebildet sein, wobei Polyamidgewebe, insbesondere PA 6, bevorzugte Materialen darstellen.

Polyamid besitzt gute Gleiteigenschaften, einen hohen Verschleisswiderstand und eine hohe Abriebfestigkeit. Eine als Polyamidgewebe ausgebildete äussere Schicht kann damit vorteilhafterweise gut über die Isolationsschicht gleiten und diese so vor Beschädigungen durch Scherkräfte, die beispielsweise beim Verlegen der mehrschichtigen Rohrleitung auftreten können, schützen. Eine als Polyamidgewebe ausgebildete äussere Schicht kann auch vorteilhafterweise gut durch ein bereits verlegtes Leerrohr gleiten, so dass ein Durchführen einer mehrschichtigen Rohrleitung mit einer als Polyamidgewebe ausgebildeten äusseren Schicht durch ein bereits verlegtes Leerrohr vereinfacht ausgeführt werden kann.

Gemäss einer weiteren Ausführungsform der erfindungsgemässen mehrschichtigen Rohrleitung ist die mehrschichtige Rohrleitung in einem ungebogenen Zustand kreiszylinderförmig ausgebildet, wobei das innere Rohr und die Isolationsschicht jeweils hohlzylindrisch ausgebildet sind.

In einem ungebogenen Zustand, der insbesondere vor einem Verlegen und Anschliessen der mehrschichtigen Rohrleitung vorliegen kann, kann die Rohrleitung kreiszylinderförmig ausgebildet sein und sich im Wesentlichen entlang der Hauptausdehnungsrichtung des inneren Rohrs bzw. der mehrschichtigen Rohrleitung erstrecken. Nach einem Verlegen und Anschliessen, z.B. an einer Wärmepumpe oder einem Warmwasserheizungssystem, der mehrschichtigen Rohrleitung kann die mehrschichtige Rohrleitung im Allgemeinen gebogen und zum Teil leicht deformiert sein. Ein hohlzylindrisch ausgebildetes inneres Rohr kann im Inneren einer hohlzylindrisch ausgebildeten Isolationsschicht angeordnet sein.

Gemäss einer weiteren Ausführungsform der erfindungsgemässen mehrschichtigen Rohrleitung ist die innere Schicht an mindestens 50%, insbesondere an mindestens 70%, insbesondere an mindestens 90% und vorzugsweise an 100% ihrer an die Isolationsschicht angrenzenden Seite mit der Isolationsschicht nicht stoffschlüssig verbunden.

Die an die Isolationsschicht angrenzende Seite der inneren Schicht kann auch als aussenseitige Fläche bezeichnet werden. Im Falle einer als Hohlzylinder ausgebildeten inneren Schicht entspricht die an die Isolationsschicht angrenzende Seite der inneren Schicht der Aussenmantelfläche der inneren Schicht. Eine nicht-stoffschlüssige Verbindung zwischen der Isolationsschicht und der inneren Schicht kann als Vorteil eine bessere Beweglichkeit der mehrschichtigen Rohrleitung bieten, da sich die innere Schicht und die Isolationsschicht zum Teil gegeneinander bewegen können. Somit kann ein Verlegen und Anschliessen der mehrschichtigen Rohrleitung weiter vereinfacht werden.

Gemäss einer weiteren Ausführungsform der erfindungsgemässen mehrschichtigen Rohrleitung ist der Innendurchmesser der Isolationsschicht zwischen 0.2 bis 0.6 cm, vorzugsweise 0.4 cm, grösser als der Aussendurchmesser des inneren Rohrs, und/oder beträgt die Wanddicke der Isolationsschicht zwischen 1.8 bis 2.5 cm, vorzugsweise 2.2 cm.

Allgemeiner kann der Innendurchmesser der Isolationsschicht auch zwischen 5 bis 30%, insbesondere zwischen 10 bis 20%, grösser sein als der Aussendurchmesser des inneren Rohrs.

Ein Innendurchmesser der Isolationsschicht, der grösser als ein Aussendurchmesser des inneren Rohrs ist, bewirkt, dass zwischen dem inneren Rohr und der Isolationsschicht zumindest abschnittsweise ein Spalt vorhanden ist, wobei ein solcher Spalt zusätzlich ein beim Verlegen und Anschliessen der mehrschichtigen Rohrleitung eventuell nötiges Biegen der Rohrleitung erleichtern kann. Das innere Rohr wird im Allgemeinen zumindest abschnittsweise auch die Isolationsschicht berühren. Weiterhin kann ein solcher Spalt dabei helfen, Materialspannungen zu vermeiden, die z.B. aufgrund unterschiedlichen thermischen Ausdehnungsverhaltens der inneren Schicht und der Isolationsschicht entstehen könnten.

Gemäss einer weiteren Ausführungsform der erfindungsgemässen mehrschichtigen Rohrleitung ist die Aussenmantelfläche des inneren Rohrs feinstrukturiert, insbesondere geriffelt, ausgebildet, und ist die Innenmantelfläche des inneren Rohrs glatt ausgebildet.

Eine insbesondere geriffelte Aussenmantelfläche des inneren Rohrs kann einen verbesserten Kontakt zwischen der inneren Schicht und der Isolationsschicht an den Stellen, an denen sich die innere Schicht und die Isolationsschicht berühren, ermöglichen. Da das innere Rohr und die Isolationsschicht nicht-stoffschlüssig verbunden sein können, kann durch die geriffelte Aussenmantelfläche ein Verrutschen - insbesondere in der Hauptausdehnungsrichtung des inneren Rohres - des inneren Rohres gegenüber der Isolationsschicht erschwert werden, wodurch eine Stabilität des mehrschichtigen Rohres verbessert werden kann. Eine glatte Innenmantelfläche des inneren Rohrs wiederum kann ein Fliessverhalten eines Fluides im Inneren des inneren Rohrs verbessern.

Gemäss einer weiteren Ausführungsform der erfindungsgemässen mehrschichtigen Rohrleitung beträgt der Aussendurchmesser des inneren Rohrs zwischen 2.3 bis 3 cm, vorzugsweise 2.5 cm, und/oder beträgt der Innendurchmesser des inneren Rohrs zwischen 1. 5 bis 1.9 cm, vorzugsweise 1.7 cm.

Gemäss einer weiteren Ausführungsform der erfindungsgemässen mehrschichtigen Rohrleitung ist die innere Schicht dreischichtig ausgebildet, wobei eine erste Schicht der dreischichtigen inneren Schicht als Butyll<autschul<schicht ausgebildet ist, wobei eine zweite Schicht der dreischichtigen inneren Schicht, die zwischen der ersten Schicht und einer dritten Schicht der dreischichtigen inneren Schicht angeordnet ist, als textiles Flächengebilde ausgebildet ist, insbesondere Nylonfasern aufweisend, und wobei die dritte Schicht als Butyll<autschul<schicht ausgebildet ist.

Das textile Flächengebilde als zweite Schicht der dreischichtigen inneren Schicht kann eine Verstärkung des inneren Rohrs bereitstellen, wodurch eine Stabilität der mehrschichtigen Rohrleitung verbessert werden kann.

Gemäss einer weiteren Ausführungsform der erfindungsgemässen mehrschichtigen Rohrleitung ist die zweite Schicht als Nylongewebe ausgebildet.

Gemäss einer weiteren Ausführungsform der mehrschichtigen Rohrleitung sind die erste Schicht mit der zweiten Schicht und die zweite Schicht mit der dritten Schicht jeweils stoffschlüssig und/oder formschlüssig verbunden.

Gemäss einem zweiten Aspekt der Erfindung betrifft die Erfindung eine Verwendung einer mehrschichtigen Rohrleitung gemäss dem ersten Aspekt der Erfindung zum Verbinden eines Warmwasserheizungssystems mit einer Wärmepumpe.

Eine mehrschichtige Rohrleitung gemäss dem ersten Aspekt der Erfindung kann zum Verbinden eines Warmwasserheizungssystems, das beispielsweise eine Fussbodenheizung in einem Wohnhaus umfassen kann, mit einer Wärmepumpe, beispielsweise in Form einer Luft-Wasser-Wärmepumpe oder einer Wasser-Wasser-Wärmepumpe oder einer Sole-Wasser-Wärmepumpe, eingesetzt werden. Im Allgemeinen kann die mehrschichtige Rohrleitung neben Wasser auch andere Fluide führen, die in einem Warmwasserheizungssystem und/oder einer Wärmepumpe anstelle von Wasser verwendet werden können.

Die Wärmepumpe und das Warmwasserheizungssystem können getrennte Fluidkreisläufe aufweisen und zum Beispiel über einen Wärmetauscher, der insbesondere auch Teil der Wärmepumpe sein kann, miteinander verbunden sein. Durch die mehrschichtige Rohrleitung kann ein wasserbasiertes Fluid geleitet werden, welches insbesondere frostbeständig ausgebildet sein kann und vorzugsweise als Wasser-Glykol-Gemisch ausgebildet ist.

Die Wärmepumpe kann als Monoblock-Wärmepumpe ausgeführt sein; die Wärmepumpe kann insbesondere auch als Split-Wärmepumpe ausgeführt sein, wobei ein Teil der Split-Wärmepumpe ausserhalb eines Hauses im Freien und ein anderer Teil der Wärmepumpe innerhalb des Hauses angeordnet sein kann.

Da die mehrschichtige Rohrleitung gemäss dem ersten Aspekt der Erfindung durch ihre Beschaffenheit, insbesondere die, zumindest teilweise, nicht-stoffschlüssige Verbindung zwischen der Isolationsschicht und der äusseren Schicht bedingt, leicht verlegt werden kann, eignet sie sich gut dazu, zusammen mit der Wärmepumpe nachträglich installiert zu werden. Insbesondere kann die mehrschichtige Rohrleitung auf einfachere Art und Weise durch ein bereits, insbesondere im Erdreich verlegtes, Grundrohr geführt werden, um eine ausserhalb eines Hauses stehende Wärmepumpe mit einem Warmwasserheizungssystem im Haus zu verbinden.

Falls die mehrschichtige Rohrleitung vorteilhafterweise im Wesentlichen nur aus nichtmetallischen Werkstoffen besteht, kann die mehrschichtige Rohrleitung auch vereinfacht angeschlossen werden. Insbesondere kann ein Installateur die Rohrleitung einfach je nach Notwendigkeit kürzen, und, falls das innere Rohr hinreichend biegsam ausgebildet ist, zum Beispiel mittels einer Bride an einem externen Anschluss anbringen.

Gemäss einer Ausführungsform der erfindungsgemässen Verwendung ist die mehrschichtige Rohrleitung so mit der Wärmepumpe und dem Warmwasserheizungssystem verbunden, dass sie von der Wärmepumpe erwärmtes Wasser zum Warmwasserheizungssystem führt oder dass sie durch das Warmwasserheizungssystem abgekühltes Wasser zur Wärmepumpe führt, wobei die mehrschichtige Rohrleitung zumindest teilweise in einem, insbesondere im Erdreich verlegten, Grundrohr verlegt ist.

Zum Verbinden eines Warmwasserheizungssystems mit einer Wärmepumpe können vorteilhafterweise auch zwei mehrschichtige Rohrleitungen verwendet werden, wobei eine erste der zwei mehrschichtigen Rohrleitungen so angeschlossen wird, dass sie dazu ausgebildet ist, erwärmtes Wasser von der Wärmepumpe zum Warmwasserheizungssystem zu führen, und wobei eine zweite der zwei mehrschichtigen Rohrleitungen so angeschlossen ist, dass sie dazu ausgebildet ist, vom Warmwasserheizungssystem abgekühltes Wasser zur Wärmepumpe zu führen. Die zwei mehrschichtigen Rohrleitungen können zusammen in einem Grundrohr oder alternativ in separaten Grundrohren verlegt werden.

Gemäss einem dritten Aspekt der Erfindung betrifft die Erfindung ein Verfahren zum Verlegen einer mehrschichtigen Rohrleitung gemäss dem ersten Aspekt der Erfindung, umfassend den Schritt des Einführens der mehrschichtigen Rohrleitung durch ein zuvor, insbesondere im Erdreich, verlegtes Grundrohr.

Gemäss einer Ausführungsform des erfindungsgemässen Verfahrens umfasst der Schritt des Einführens der mehrschichtigen Rohrleitung die folgenden Unterschritte:
a) I<raftschlüssiges Befestigen eines Einziehseils an einem ersten Ende der mehrschichtigen Rohrleitung;
b) Stossen des Einziehseils von einem ersten Ende des Grundrohrs zum zweiten Ende des Grundrohrs, bis das Einziehseil das Grundrohr am zweiten Ende verlässt; und
c) Ziehen an einem Teil des Einziehseils, der das Grundrohr am zweiten Ende verlassen hat, weg vom Grundrohr, und Stossen der mehrschichtigen Rohrleitung in das erste Ende des Grundrohrs in Richtung des zweiten Endes, bis das erste Ende der mehrschichtigen Rohrleitung das zweite Ende des Grundrohrs verlässt.

Das kraftschlüssige Befestigen des Einziehseils am ersten Ende der mehrschichtigen Rohrleitung kann durch eine manschettenartige Umschliessung des ersten Endes bereitgestellt werden. Das Einziehseil ist vorteilhafterweise hinreichend steif, um einfach durch Grundrohre gestossen werden zu können. Weiterhin muss es so ausgebildet sein, dass es beim Schritt c) des Ziehens nicht reisst. Ferner ist es vorteilhaft, wenn das Einziehseil so beschaffen ist, dass es eine geringe Reibung gegenüber dem Grundrohr aufweist, so dass einem Installateur das Einführen der mehrschichtigen Rohrleitung in das Grundrohr nicht durch eine zu grosse Reibung zwischen dem Einziehseil und dem Grundrohr zusätzlich erschwert wird. Um das Ausführen der Schritte b) und c) zu erleichtern, kann das Grundrohr und/oder die äussere Schicht der mehrschichtigen Rohrleitung zusätzlich mit Schmiermittel, z.B. ein Schmiermittel basierend auf Fett, Silikon und/oder Talg, versehen werden, um eine Reibung zwischen der mehrschichtigen Rohrleitung bzw. dem Einziehseil und dem Grundrohr zu verringern.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
Fig. 1 zeigt eine schematische Querschnittsansicht durch eine mehrschichtige Rohrleitung;
Fig. 2 zeigt eine schematische perspektivische Ansicht einer mehrschichtigen Rohrleitung; und
Fig. 3 zeigt eine schematische Ansicht einer Verwendung zweier mehrschichtiger Rohrleitungen zum Verbinden eines Warmwasserheizungssystems mit einer Wärmepumpe.

Grundsätzlich sind in den Figuren gleiche Teile mit gleichen Bezugszeichen versehen.

### Wege zur Ausführung der Erfindung

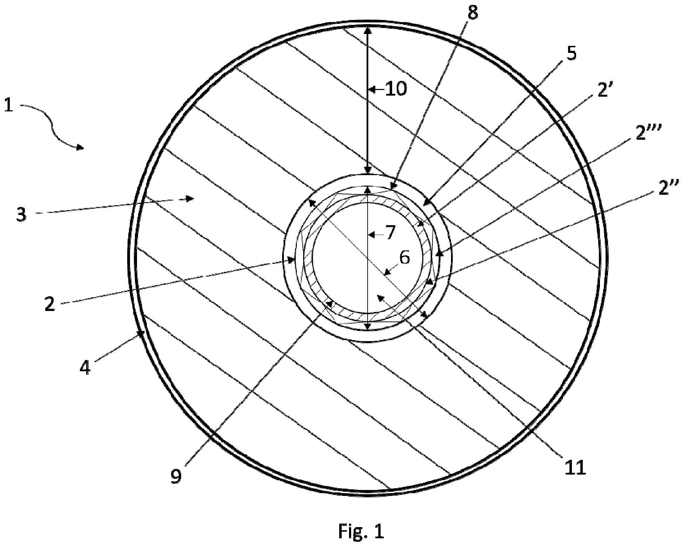

**Fig. 1** zeigt eine schematische Querschnittsansicht durch eine mehrschichtige Rohrleitung 1. Die mehrschichtige Rohrleitung 1 weist eine innere Schicht 2, eine Isolationsschicht 3 und eine äussere Schicht 4 auf. Die innere Schicht 2 bildet ein inneres Rohr aus, wobei ein Inneres 11 des inneren Rohrs zum Führen eines Fluides ausgebildet ist.

Die innere Schicht 2 ist in Fig. 1 dreischichtig ausgebildet und weist eine erste Schicht 2', eine zweite Schicht 2" und eine dritte Schicht 2‴ auf. Die erste Schicht 2' und die dritte Schicht 2‴ können aus dem gleichen Material gebildet sein, beispielsweise einem Butylkautschuk; die zweite Schicht 2" kann eine Verstärkungsschicht ausbilden und als textiles Flächengebilde, insbesondere Nylonfasern aufweisend, ausgebildet sein, wobei die Nylonfasern insbesondere als Nylongewebe angeordnet sein können. Die Isolationsschicht 3 kann als Polyurethanschaumstoff und/oder als Ethylen-Propylen-Dien-I<autschul<-Schaumstoff (EPDM-Schaumstoff) ausgebildet sein.

Zwischen der inneren Schicht 2 und der Isolationsschicht 3 ist ein Spalt 5 angeordnet. Dieser Spalt 5 ist in Fig. 1 idealisierend dargestellt: Im Allgemeinen wird, insbesondere bei einer verlegten mehrschichtigen Rohrleitung 1, der Abstand zwischen der inneren Schicht 2, insbesondere der dritten Schicht 2‴ der inneren Schicht 2, und der Isolationsschicht 3 nicht wie in Fig. 1 dargestellt über den gesamten Winl<elbereich gleichmässig ausgebildet sein, sondern variabel ausgebildet sein. Insbesondere kann die Schwerkraft bewirken, dass ein Abstand zwischen der inneren Schicht 2 und der Isolationsschicht 3 in Richtung der Schwerkraft geringer ist als in die Richtung entgegen der Schwerkraft, da sich das innere Rohr unter dem Einfluss der Schwerkraft insbesondere verbiegen kann.

Der Aussendurchmesser 7 des inneren Rohres 2 ist in Fig. 1 kleiner als der Innendurchmesser 6 der Isolationsschicht 3, wobei die innere Schicht 2 und die Isolationsschicht 3 jeweils als Hohlzylinder ausgeführt sind. Hierdurch wird erreicht, dass unabhängig von der Art und Weise der Biegung der mehrschichtigen Rohrleitung 1 immer ein Spalt 5 vorhanden ist. Der Spalt 5 kann beim Verlegen der mehrschichtigen Rohrleitung 1 vorteilhaft sein, da ein eventuell notwendiges Biegen der mehrschichtigen Rohrleitung 1 vereinfacht ausgeführt werden kann.

Die Aussenmantelfläche 8 der inneren Schicht 8 kann geriffelt ausgebildet sein. Hierdurch kann an I<ontal<tstellen zwischen der inneren Schicht 2 und der Isolationsschicht 3, die durch eine Biegung hervorgerufen werden können, eine verbesserte Haftung zwischen dem inneren Rohr und der Isolationsschicht 3 vermittelt werden, wodurch ein Verrutschen des inneren Rohrs unterbunden werden kann. Die Innenmantelfläche 9 des inneren Rohrs kann glatt ausgebildet sein, um ein Fluid im Inneren 11 des inneren Rohrs besser führen zu können. Die Wanddicke 10 der Isolationsschicht 3 kann so dimensioniert sein, dass in Abhängigkeit vom gewählten Isolationsmaterial und einer Temperaturdifferenz zwischen einem im Inneren 11 des inneren Rohrs geführten Fluid und einer Umgebung der mehrschichtigen Rohrleitung 1, beispielsweise einer Temperatur in einem Grundrohr, eine gewünschte Isolierung erzielt werden kann. Der Innendurchmesser 16 des inneren Rohrs kann so dimensioniert sein, dass eine je nach Anwendung notwendige Menge an Fluid durch das innere Rohr geführt werden kann.

Die äussere Schicht 4 ist zumindest teilweise, vorzugsweise vollständig, nicht-stoffschlüssig mit der Isolationsschicht 3 verbunden. Die äussere Schicht 4 kann als textiles Flächengebilde ausgebildet sein, insbesondere als Polymergewebe, vorzugsweise als Polyamidgewebe vom Typ PA 6. Somit kann die äussere Schicht 4 zumindest teilweise gegenüber der Isolationsschicht 3 bewegt werden, so dass die Isolationsschicht 3 vor Beschädigungen durch Scherkräfte, die insbesondere beim Verlegen der mehrschichtigen Rohrleitung 1 auftreten können, geschützt werden kann. Die äussere Schicht 4 ist weiterhin vorzugsweise so beschaffen, dass sie gute Gleiteigenschaften bietet, um ein Verlegen der mehrschichtigen Rohrleitung zum Beispiel durch ein Grundrohr zu vereinfachen.

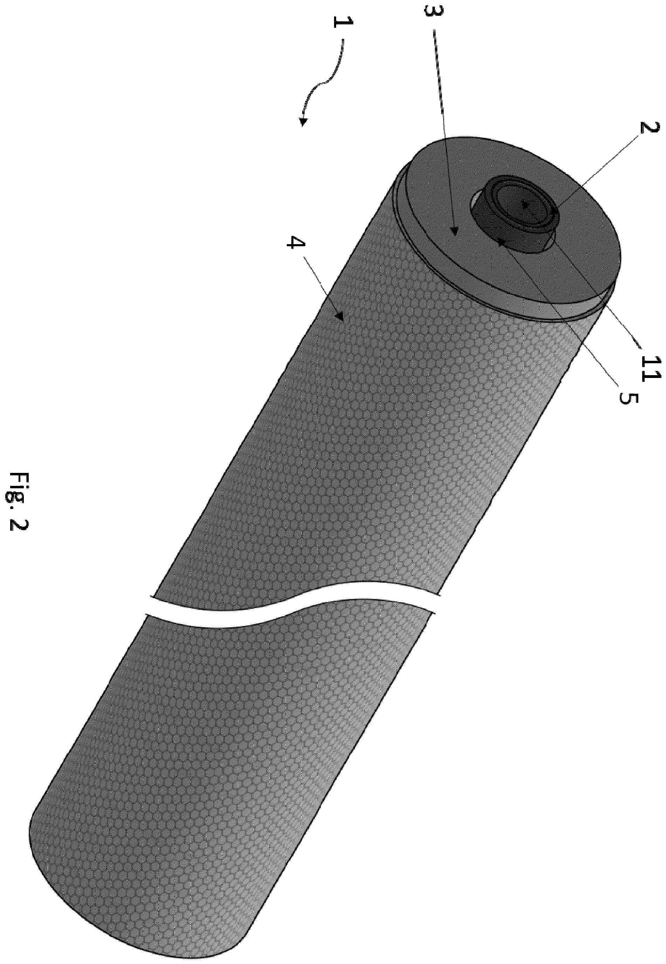

**Fig. 2** zeigt eine schematische perspektivische Ansicht einer mehrschichtigen Rohrleitung 1, wobei der gezeigte Schichtenaufbau in Fig. 2 dem in Fig. 1 gezeigten entspricht. Die mehrschichtige Rohrleitung 1 weist eine innere Schicht 2, eine Isolationsschicht 3 und eine äussere Schicht 4 auf. Die mehrschichtige Rohrleitung 1 ist dazu ausgebildet, im Inneren 11 der inneren Schicht 2 ein Fluid zu führen.

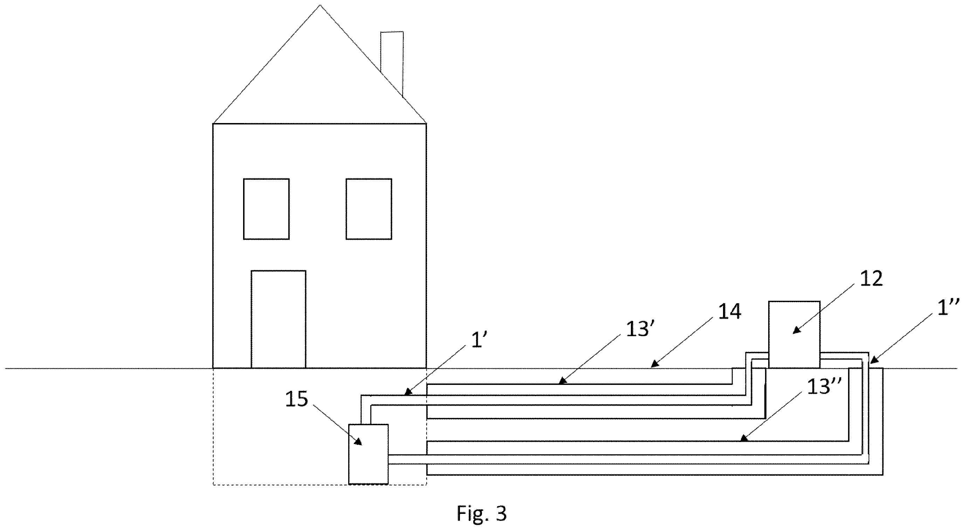

**Fig. 3** zeigt eine schematische Ansicht einer Verwendung zweier mehrschichtiger Rohrleitungen 1'.1" zum Verbinden eines Warmwasserheizungssystems 15 mit einer Wärmepumpe 12.

Um ein nachträgliches Installieren einer Wärmepumpe 12 zu ermöglichen, können bereits beim Bau eines Hauses Grundrohre 13',13" im Erdreich 14 verlegt werden, durch die zu einem späteren Zeitpunkt Rohrleitungen zum Verbinden der Wärmepumpe 12 mit dem Warmwasserheizungssystem 15 gezogen werden können. Ein Anschluss kann dabei insbesondere im Keller eines Hauses erfolgen. Durch eine erste Rohrleitung 1' kann erwärmtes Wasser von der Wärmepumpe 12 zum Warmwasserheizungssystem 15 geführt werden, und durch eine zweite Rohrleitung 1" kann vom Warmwasserheizungssystem 15 abgekühltes Wasser zur Wärmepumpe 12 geführt werden. Die zwei mehrschichtigen Rohrleitungen 1',1" können wie in Fig. 3 dargestellt in separaten Grundrohren 13',13" verlegt werden, oder alternativ zusammen in einem Grundrohr.

Jede der zwei mehrschichtigen Rohrleitungen 1',1" kann wie folgt durch das jeweilige Grundrohr 13',13" geführt werden: In einem ersten Schritt kann ein Einziehseil an einem Ende einer mehrschichtigen Rohrleitung 1',1" befestigt werden, und dieses Einziehseil kann in einem zweiten Schritt von einem Ende des Grundrohrs 13',13" zum anderen Ende gestossen werden; in einem dritten Schritt kann durch Ziehen des Einziehseils an diesem anderen Ende und Stossen der mehrschichtigen Rohrleitung 1',1" in das Grundrohr 13',13" in Richtung des anderen Endes die mehrschichtige Rohrleitung 1',1" in das Grundrohr 13',13" eingeführt werden. Aufgrund der Bewegbarkeit der äusseren Schicht 4 relativ zur Isolationsschicht 3, ihrer Gleiteigenschaften und des, falls vorhandenen, Spalts 5 zwischen der inneren Schicht 2 und der Isolationsschicht 3, kann ein Verlegen der mehrschichtigen Rohrleitung 1',1" durch das Grundrohr 13',13" im Vergleich zu aus dem Stand der Technik bekannten mehrschichtigen Rohrleitungen vereinfacht und ohne zu grossen notwendigen Krafteinsatz ausgeführt werden.

Ein Installateur kann die mehrschichtigen Rohrleitungen 1',1" anschliessend falls erforderlich und zum Beispiel mit Briden oder anderen geeigneten Verbindungsmechanismen mit der Wärmepumpe 12 und dem Warmwasserheizungssystem 15 verbinden.

## Patentansprüche

1. Mehrschichtige Rohrleitung (1,1',1") zum Führen eines Fluides, wobei die mehrschichtige Rohrleitung (1,1',1") zumindest folgende Schichten aufweist:
a) eine innere Schicht (2,2',2",2‴), die ein inneres Rohr zum Führen des Fluides ausbildet,
b) eine die innere Schicht (2,2',2",2‴) umgebende Isolationsschicht (3), wobei die Isolationsschicht (3) auf einer von einer Mittellinie des inneren Rohrs abgewandten Seite der inneren Schicht ((2,2',2",2‴) angeordnet ist,
c) eine die Isolationsschicht (3) umgebende äussere Schicht (4), wobei die äussere Schicht (4) auf einer von der Mittellinie des inneren Rohrs abgewandten Seite der Isolationsschicht (3) angeordnet ist, und wobei die äussere Schicht (4) an mindestens 50%, insbesondere an mindestens 70%, insbesondere an mindestens 90% und vorzugsweise an 100% ihrer an die Isolationsschicht (3) angrenzenden Seite nicht stoffschlüssig mit der Isolationsschicht (3) verbunden ist und/oder relativ zur Isolationsschicht (3) bewegbar ist.

2. Mehrschichtige Rohrleitung (1.1',1") gemäss Anspruch 1, wobei die innere Schicht (2,2',2",2‴) Kautschuk enthält, und/oder wobei die Isolationsschicht (3) als Polyurethanschaumstoff und/oder als Ethylen-Propylen-Dien-I<autschul<-Schaumstoff (EPDM-Schaumstoff) ausgebildet ist, und/oder wobei die äussere Schicht (4) als textiles Flächengebilde ausgebildet ist.

3. Mehrschichtige Rohrleitung (1,1',1") gemäss Anspruch 2, wobei das textile Flächengebilde als Polyamidgewebe, insbesondere Polyamide vom Typ PA 6 aufweisend, ausgebildet ist.

4. Mehrschichtige Rohrleitung (1,1',1") gemäss einem der vorherigen Ansprüche, wobei die mehrschichtige Rohrleitung (1,1',1") in einem unverbogenen Zustand kreiszylinderförmig ausgebildet ist, wobei das innere Rohr und die Isolationsschicht (3) jeweils hohlzylindrisch ausgebildet sind.

5. Mehrschichtige Rohrleitung (1,1',1") gemäss einem der vorherigen Ansprüche, wobei die innere Schicht (2,2',2",2‴) an mindestens 50%, insbesondere an mindestens 70%, insbesondere an mindestens 90% und vorzugsweise an 100% ihrer an die Isolationsschicht (3) angrenzenden Seite mit der Isolationsschicht (3) nicht stoffschlüssig verbunden ist.

6. Mehrschichtige Rohrleitung (1,1',1") gemäss Anspruch 4 und 5, wobei der Innendurchmesser (6) der Isolationsschicht (3) zwischen 0.2 bis 0.6 cm, vorzugsweise 0.4 cm, grösser ist als der Aussendurchmesser (7) des inneren Rohrs, und/oder wobei die Wanddicke (10) der Isolationsschicht (3) zwischen 1.8 bis 2.5 cm, vorzugsweise 2.2 cm, beträgt.

7. Mehrschichtige Rohrleitung (1,1',1") nach Anspruch 6, wobei die Aussenmantelfläche (8) des inneren Rohrs feinstrukturiert, insbesondere geriffelt, ausgebildet ist, und wobei die Innenmantelfläche (9) des inneren Rohrs glatt ausgebildet ist.

8. Mehrschichtige Rohrleitung (1,1',1") gemäss Anspruch 6 oder 7, wobei der Aussendurchmesser (7) des inneren Rohrs zwischen 2.3 bis 3 cm, vorzugsweise 2.5 cm, beträgt, und/oder wobei der Innendurchmesser (16) des inneren Rohrs zwischen 1. 5 bis 1.9 cm, vorzugsweise 1.7 cm, beträgt.

9. Mehrschichtige Rohrleitung (1,1',1") gemäss einem der vorherigen Ansprüche, wobei die innere Schicht (2,2',2",2‴) dreischichtig ausgebildet ist, wobei eine erste Schicht (2') der dreischichtigen inneren Schicht als Butyll<autschul<schicht ausgebildet ist, wobei eine zweite Schicht (2") der dreischichtigen inneren Schicht, die zwischen der ersten Schicht (2') und einer dritten Schicht (2‴) der dreischichtigen inneren Schicht angeordnet ist, als textiles Flächengebilde ausgebildet ist, insbesondere Nylonfasern aufweisend, und wobei die dritte Schicht (2‴) als Butyll<autschul<schicht ausgebildet ist.

10. Mehrschichtige Rohrleitung (1,1',1") gemäss Anspruch 9, wobei die zweite Schicht (2") als Nylongewebe ausgebildet ist.

11. Mehrschichtige Rohrleitung (1,1',1") gemäss Anspruch 9 oder 10, wobei die erste Schicht (2') mit der zweiten Schicht (2") und die zweite Schicht (2") mit der dritten Schicht (2‴) jeweils stoffschlüssig und/oder formschlüssig verbunden sind.

12. Verwendung einer mehrschichtigen Rohrleitung (1,1',1") gemäss einem der Ansprüche 1 bis 11 zum Verbinden eines Warmwasserheizungssystems (15) mit einer Wärmepumpe (12).

13. Verwendung einer mehrschichtigen Rohrleitung (1,1',1") gemäss Anspruch 12, wobei die mehrschichtige Rohrleitung (1,',1") so mit der Wärmepumpe (12) und dem Warmwasserheizungssystem (15) verbunden ist, dass sie von der Wärmepumpe (12) erwärmtes Wasser zum Warmwasserheizungssystem (15) führt oder dass sie vom Warmwasserheizungssystem (15) abgekühltes Wasser zur Wärmepumpe (12) führt, wobei die mehrschichtige Rohrleitung (1,1',1") zumindest teilweise in einem, insbesondere im Erdreich (14) verlegten, Grundrohr (13',13") verlegt ist.

14. Verfahren zum Verlegen einer mehrschichtigen Rohrleitung (1,1',1") gemäss einem der Ansprüche 1 bis 11, umfassend den Schritt des Einführens der mehrschichtigen Rohrleitung (1,1',1") durch ein zuvor, insbesondere im Erdreich (14), verlegtes Grundrohr (13',13").

15. Verfahren gemäss Anspruch 14, wobei der Schritt des Einführens der mehrschichtigen Rohrleitung (1,1',1") die folgenden Unterschritte umfasst:
a) I<raftschlüssiges Befestigen eines Einziehseils an einem ersten Ende der mehrschichtigen Rohrleitung (1,1',1");
b) Stossen des Einziehseils von einem ersten Ende des Grundrohrs (13', 13") zum zweiten Ende des Grundrohrs (13', 13"), bis das Einziehseil das Grundrohr (13', 13") am zweiten Ende verlässt; und
c) Ziehen an einem Teil des Einziehseils, der das Grundrohr (13',13") am zweiten Ende verlassen hat, weg vom Grundrohr (13',13"), und Stossen der mehrschichtigen Rohrleitung (1,1',1") in das erste Ende des Grundrohrs (13',13") in Richtung des zweiten Endes, bis das erste Ende der mehrschichtigen Rohrleitung (1,1',1") das zweite Ende des Grundrohrs (13', 13") verlässt.
